# EUROPÄISCHE PATENTSCHRIFT

(11) **EP 3 053 542 B1**
(45) Veröffentlichungstag und Bekanntmachung des Hinweises auf die Patenterteilung: **28.03.2018**
(21) Anmeldenummer: 15154217.2
(22) Anmeldetag: 06.02.2015
(51) Int. Cl.: A61C 13/15, G01J 1/42

(54) **Dentales Lichthärtgerät**
Dental light curing apparatus
Appareil dentaire de durcissement à la lumière

(43) Veröffentlichungstag der Anmeldung: 10.08.2016
(73) Patentinhaber: Ivoclar Vivadent AG, 9494 Schaan (LI)
(72) Erfinder: Senn, Bruno, 9474 Grabs (CH); Tommasini, Dario, 7302 Mastrils (CH)
(74) Vertreter: Baronetzky, Klaus

(56) Entgegenhaltungen:
- EP-A2- 0 563 953
- US-A1- 2006 240 376
- US-A1- 2010 003 633
- US-A1- 2010 140 450

## Beschreibung

Die Erfindung betrifft ein Lichthärtgerät, gemäß dem Oberbegriff von Anspruch 1.

Lichthärtgeräte für die Polymerisation von Dentalmaterialien sind seit langem bekannt. Während in den 90er Jahren teilweise noch mit Halogenlampen und dementsprechend einem breiten Lichtemissionsspektrum, das bis in den IR-Bereich hinein ragte, gearbeitet wurde, haben sich bereits um 2000 Lichthärtgeräte durchgesetzt, die auf LED-Chips basieren und häufig Licht mit einem Emissionsmaximum um 470 nm ausstrahlen, also im Wesentlichen blaues Licht.

Die Polymerisation erfolgt, indem ein zum Emissionsmaximum passender Fotoinitiator - beispielsweise Campherchinon - die Polymerisationsreaktionen auslöst. Dies kann stationär, also in einem ortsfesten Lichthärtgerät für die Härtung beispielsweise von Prothesenzahnträgern erfolgen, aber häufig auch über ein geeignet ausgebildetes Handgerät, mit dem beispielsweise Dentalrestaurationen an natürlichen Zähnen eines Patienten polymerisiert werden können.

Zu denken ist hier beispielsweise auch an Ausbesserungsarbeiten an Prothesen, die selbstverständlich extrakorporal durchgeführt werden können.

Derartige Handgeräte werden in weitem Umfang verwendet, und im Laufe der Jahrzehnte hat sich eine hierfür geeignete Steuervorrichtung etabliert, die die Polmerisationszeit steuert, basierend auf Vorgaben des Zahntechnikers oder Zahnarztes - entsprechend der Größe der zu polymerisierenden Dentalrestauration - aber zumindest teilweise basierend auch auf gerätespezifische Vorgaben.

Ferner sind auch verschiedene Verfahren bekannt geworden, die emittierte Strahlung zu erfassen. Hier ist beispielsweise die Lösung gemäß der DE 10 2007 052 643 A1 zu nennen.

In erster Linie ist aber auch auf Geräte zu verweisen, die die Reflexion der von dem Lichthärtgerät beaufschlagten Körper erfassen. In erster Linie sind hier die für den Dentalbereich maßgebende DE 10 2005 019 386 B4, US2010/0140450 und US2006/0240376 zu nennen. Während die Lösung gemäß der DE 92 04 621 U1 auf die von dem Gegenstand reflektierte Lichtmenge abstellt und diese erfassen will, erfasst die Lösung gemäß der genannten DE 10 2005 019 386 B4 die Strahlung im Wellenlängenberich zwischen 800 nm und 10.000 nm und vermag daher bereits gewisse Aussagen über die erfolgte Polymerisation zu treffen.

Es hat sich jedoch gezeigt, dass die Erfassung der reflektierten Strahlung und die Zuleitung dieser zur Steuervorrichtung nicht ausreicht, um vollständig zuverlässige Polymerisationsergebnisse zu erzielen.

In diesem Zusammenhang sei ergänzend darauf hingewiesen, dass bei unzureichender Polymerisation das Problem besteht, dass freie Radikale, denen nachgesagt wird, das Entstehen von Krebs zu begünstigen, nicht vollständig eingebunden sind, dass aber andererseits basierend auf einer zu intensiven Durchhärtung einer größeren Menge des Materials eine Schrumpfung des gehärteten Materials begünstigt wird, die der Entstehung von Randspalten förderlich ist.

Daher liegt der Erfindung die Aufgabe zu Grunde, ein Lichthärtgerät gemäß dem Oberbegriff von Anspruch 1 zu schaffen, da hinsichtlich der Restaurationsergebnisse beim Polymerisieren, gerade bei handgeführten Lichthärtgeräten, verbessert ist, ohne dass besonders aufwendige Versuchsreihen oder sonstige Auswertungsmaßnahme erforderlich wären.

Diese Aufgabe wird erfindungsgemäß durch Anspruch 1 gelöst. Vorteilhafte Weiterbildungen ergeben sich aus den Unteransprüchen.

Erfindungsgemäß besonders günstig ist es, dass mit der erfindungsgemäßen Vorrichtung überraschend und gleichsam automatisch die Lichtdosis, die tatsächlich an der Dentalrestauration ankommt, erfasst und ausgewertet wird. Die Hauptursache für fehlerhafte Polymerisationsarbeiten ist offenbar nicht die falsche Wahl der Polymersationszeit, sondern die ungünstige Handhabung des Lichthärtgeräts. Wenn beispielsweise lediglich ein Teil der Restaurationsoberfläche von dem Bestrahlungsende des Lichthärtgeräts, beispielsweise wegen einer versehentlichen Bewegung des Lichthärtgeräts, beaufschlagt wird, merkt dies der Benutzer ohne die Erfindung meist nicht, sondern erhält von dem handgeführten Lichthärtgerät das Signal "Polymerisationsende", nachdem der erforderliche Polymerisationszyklus mit einer Dauer von beispielsweise 10 Sekunden abgeschlossen ist.

Erfindungsgemäß wird nun eine Änderung des reflektierten Lichtsignals erfasst:
Typischerweise wird die Oberfläche der Dentalrestauration während der Durchhärtung verändert, insbesondere wird sie opaker.

Wenn die Änderung des erfassten Signals der Reflexionsstrahlung nun einen typischen, aus der Durchhärtung stammenden Verlauf annimmt, erkennt die Steuervorrichtung, dass die Polymerisations tatsächlich erfolgreich durchgeführt wurde. Wenn aber während der Härtung ein Störsignal erkannt wird, also eine Veränderung des typischen Verlaufs der Reflexionsstrahlung über den Polymerisationszyklus, liegt dies in erfindungsgemäßer Erkenntnis an einer Ortänderung des Lichthärtgeräts bezogen auf die Dentalrestauration. Diese kann eine translatorische Bewegung quer zur Achse des Lichtleiters bzw. des Lichthärtgeräts sein, oder bzw. auch zur Normalen der Lichtaustrittsfläche, aber auch eine Schrägstellung, also eine Winkelabweichung.

Wenn beispielsweise ein Teil der emittierten Lichtenergie seitlich neben dem Zahn mit der Dentalrestauration, also in die Mundhöhle fällt, wird diese typischerweise nicht reflektieren, so dass bei einer Ortsverlagerung in dieser Richtung die Reflextionsstrahlung deutlich reduziert wird.

Wenn andererseits die Lichtaustrittsfläche den Bereich der Dentalrestauration in Richtung eines gesunden Zahn verlässt, erfolgt typischerweise - bei Speichelbenetzung - sogar ein Anstieg der Reflexionsstrahlung, so dass das Ausgangssignal des Sensors für die Reflexionsstrahlung sogar zunimmt.

Erfindungsgemäß wesentlich ist es auch, dass die Lichtaustrittsfläche über ihre gesamte Quererstreckung eine gleichmäßige Lichtabgabe gewährleistet; in vorteilhafter Austgestaltung ist die Schwankung der Lichtabgabe quer zur Lichtaustrittsfläche relativ gering, und zwar bevorzugt so, dass die äußeren Bereiche der Lichtaustrittsfläche eine höhere Lichtabgabe als die inneren haben, sofern überhaupt Abweichungen bestehen.

Erfindungsgemäß ist es ferner wesentlich, dass bei Erkennung des Fehlerfalls, also einer Änderung des Ausgangssignals des Sensors, geeignete Maßnahmen ergriffen werden. Hierzu gehört die Abgabe eines Ortskorrektursignals an den Behandler, die Erhöhung der Lichtleistung - sofern eine entsprechende Regelreserve vorhanden ist - und/oder die Verlängerung des Polymerisationszyklus.

Bevorzugt wird in jedem Falle ein Alarmsignal hinsichtlich der Ortskorrektur abgegeben, damit der Behandler nach Beendigung des Polymerisationszyklus mit einem geeigneten dentaltechnischen Instrument überprüft, ob die Durchhärtung in befriedigender Weise vorgenommen worden ist; wenn dies aufgrund einer dennoch zu starken Ortsabweichung nicht der Fall ist, wird dem Behandler der Hinweis übermittelt, an dieser Stelle nachzuhärten.

Überraschend lässt sich mit der erfindungsgemäßen Erfassung der Änderung des Reflexionssignals in seinem zeitlichen Verlauf durch eine "Störstelle" erfassen, ob eine Ortsabweichung vorliegt, und der Polymerisationszyklus lässt sich mit der Erfindung zuverlässig und störsicher durchführen, auch wenn die in der täglichen Praxis nicht stets gewährleistete ruhige Hand des Behandlers fehlt.

In vorteilhafter Weise ist es auch möglich, die Lichtleistung in Anpassung an das gemessene Polymerisationsergebnis zu erhöhen. Dies kann beispielsweise so realisiert werden, dass die gemessene Reflexionsstrahlung konstant geregelt wird. Dies bedingt eine Zunahme der emittierten Lichtleistung während der Lichtabgabe.

Besonders günstig hierbei ist es, dass durch eine derartige Härtung offenbar eine gleichmäßigere Durchhärtung vorgenommen werden kann, denn typischerweise bremst die Verfestigung der Oberfläche der Dentalrestauration den Durchtritt der Lichtleistung in tiefere Schichten, was in vorteilhafter Ausgestaltung der Erfindung kompensiert werden kann.

Die Fehlstellung der Lichtaustrittsfläche bezogen auf die Dentalrestauration lässt sich erfindungsgemäß typischerweise erfassen und auch - mindestens teilweise - kompensieren. Dies lässt sich besonders günstig durch Auswertung des Integrals über die emittierte Lichtleistung vornehmen, denn erfindungsgemäß wird die Lichtleistung zur Berechnung einer etwaigen Ortsabweichung aufsummiert.

Es versteht sich, dass hier Ortsabweichungen nicht auf den reinen translatorischen Bereich beschränkt sind, sondern auch eine etwaige Winkelabweichung, beispielsweise um 20 °, zwischen der Restaurationsoberfläche und der Lichtaustrittsfläche einschließen sollen; bei einer derartigen Änderung empfiehlt sich typischerweise eine Verlängerung des Polymerisationszyklus, die dann die teilweise mangelhafte Lichtabgabe kompensieren kann.

In der Erfindung ist es vorgesehen, mehr als einen Lichtsensor, beispielsweise drei Lichtsensoren um den Umfang der LED-Chips verteilt an dem Lichthärtgerät vorzusehen. Bei Verwendung eines Lichtleiters, aber auch bei direkter Montage an der Spitze des Lichthärtgeräts, also der Lichtaustrittsfläche benachbart, erfolgt dann auch eine räumlich selektive Erfassung der Reflexionsstrahlung. Wenn die Erfassung ergibt, dass beispielsweise eines der Ausgangssignale der Sensoren stark reduziert ist, während die anderen beiden in unveränderter Höhe bestehen, lässt sich hierdurch auch ein Ortskorrekturhinweis ableiten, beispielsweise in dem Sinne, dass das Lichthärtgerät mit seiner Austrittsfläche in Gegenrichtung zu der Stelle des Sensors mit dem reduzierten Signal verlagert werden soll.

Weitere Vorteile, Einzelheiten und Merkmale ergeben sich aus der nachstehenden Beschreibung eines Ausführungsbeispiels der Erfindung anhand der Zeichnungen.

Es zeigen:
- Fig. 1: eine schematische Kurve einer von mindestens einem Sensor erfassten und der Steuervorrichtung zugeleiteten Reflextionsstrahlung, entsprechend dem Ausgangssignal des Sensors in einer Ausführungsform eines erfindungsgemäßen Lichthärtgeräts;
- Fig. 2: die Kurve gemäß Fig. 1, wobei jedoch eine Störung zum Zeitpunkt t_{S} auftritt;
- Fig. 3: die Kurve gemäß Fig. 1, wobei eine gegenüber Fig. 2 andere Störung zum Zeitpunkt t_{S} auftritt;
- Fig. 4: eine schematische Darstellung der zur Kompensation der Oberflächenhärtung erhöhten Lichtleistung;
- Fig. 5: die Kurve der Lichtleistung gemäß Fig. 4, wobei jedoch eine Störung zum Zeitpunkt t_{S} auftritt; und
- Fig. 6: eine schmatische Darstellung der Lichtaustrittsfläche im Verhältnis zu einer Dentalrestauration an einer Okklusionsfläche.

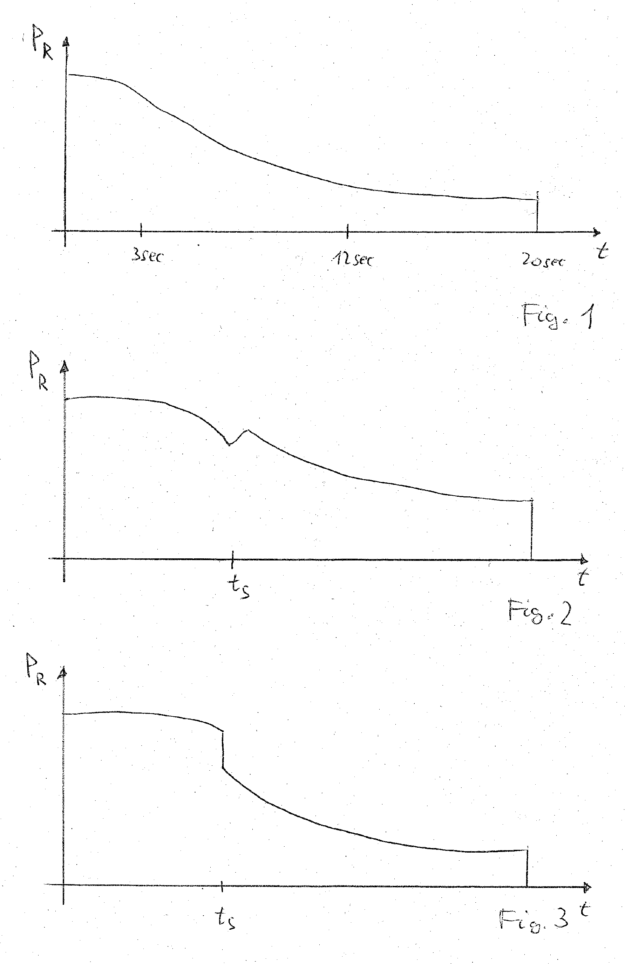

Die in Fig. 1 dargestellte reflektierte Lichtstrahlung P_{R} gibt das Ausgangssignal der Sensoren in aufsummierter Form wieder, die die von der Bestrahlungsoberfläche reflektierte Lichtstrahlung erfassen.

Das zugehörige Lichthärtgerät weist in bevorzugter Weise hierzu eine Mehrzahl von in einer Ebene nebeneinander angeordneter LED-Chips auf. Die LED-Chips sind von Reflektoren umgeben, die auch monolithisch sein können und dazu dienen, das emittierte Licht einer Lichteintrittsfläche eines Lichtleiter zuzuleiten.

Auf der Ebene der LED-Chips sind eine Mehrzahl von Sensoren angeordnet, die über eine Lichtleitoptik mit der Lichteintrittsfläche des Lichtleiters verbunden sind, wobei auch je einzelne Lichtleitfasern vorgesehen sein können.

In dieser modifizierten Ausgestaltung erstreckt sich die Sensoroptik als spezielle Lichtleitfaser durch die Lichtleiter hindurch.

Am gegenüberliegenden, distalen Ende des Lichtleiters ist eine Lichtaustrittsfläche vorgesehen, und an den Rändern der Lichtaustrittsfläche sind mehrere Sensorfleder angeordnet, bevorzugt gleichförmig um den Umfang der Lichtaustrittsfläche verteilt, die bei Lichteinfall das dort eintreffende Licht rückwärts durch den Lichtleiter hindurch leiten und den Sensoren zuleiten. Um dies zu erreichen, sind spezielle Lichtleitfasern bevorzugt, die auch dem Empfindlichkeitsspektrum der Sensoren Rechnung tragen.

In an sich bekannter Weise ist bei der vorliegenden Ausführungsform der Lichtleiter endseitig abgekröpft, beispielsweise in einem Winkel von 45 °, wobei es alternativ auch ohne Weiteres möglich ist, einen geraden Lichtleiter zu verwenden. Der Lichtleiter weist einen Durchmesser von 10 mm oder gar 12 mm auf, und da er im Wesentlichen zylindrisch ist, beträgt die Lichtaustrittsfläche 1,13 cm² - bei einem 12 mm Lichtleiter -, abzüglich der aufsummierten Sensorfläche der Sensoren.

Bei Bedarf kann eingangsseitig des Lichtleiters auch ein zusätzlicher Homogenisierkörper vorgesehen sein, der den Lichteintritt der LED-Chips in den Lichtleiter vergleichmäßigt, so dass ein Helligkeitsunterschied über die Lichtaustrittsfläche von deutlich weniger als 50 % besteht.

In dem dargestellten Ausführungsbeispiel werden die Lichtquellen mit Reserve betrieben, so dass eine Erhöhung der zugführten elektrischen - und damit abgegebenen Lichtleistung - beispielsweise über 20 Sekunden schadlos möglich ist. Die LED-Chips geben bei der Darstellung gemäß Fig. 1 zunächst eine konstante Lichtleitstung ab, beispielsweise 80 % der Nennleistung. Beim Beginn des Härtens wird in der Darstellung gemäß Fig. 1 die volle Reflexionsstrahlung abgegeben, nachdem in diesem Zustand die Dentalrestauration noch einen zähflüssigen Aggregatzustand aufweist, und dementsprechend einen hohen Reflexionsgrad.

Bei einer Gesamtdauer des Polymerisationszyklus von beispielsweise 20 Sekunden sinkt dieser Reflexionsgrad zunehmend ab etwa 3 Sekunden, da sich dann typischerweise auf den Dentalrestaurationen eine verfestigte Oberfläche bildet, deren Reflexionseigenschaften aufgrund der zunehmenden Mikrorauigkeit geringer sind. Die Mikrorauigkeit - und damit der Reflexionsgrad - der Dentalrestauration sinkt in dem dargestellten Ausführungsbeispiel bis etwa 12 Sekunden. Der Poylmerisationszyklus ist zu disem Zeitpunkt noch nicht abgeschlossen, denn gerade die tieferliegenden Schichten oder Bereiche der Dentalrestauration müssen noch durchgehärtet werden.

Die Durchhärtung ist erst zum Zeitpunkt t = 20 Sekunden abgeschlossen.

Während dieser Zeit hat der Zahnarzt - oder Zahntechniker - die Lichtaustrittsfläche über den Dentalrestaurationen dergestalt gehalten, dass die Lichtstrahlung nach Möglichkeit senkrecht dort auftrifft. Die Normale der Lichtaustrittsfläche sollte insofern möglichst parallel zur Normalen der Dentalrestaurationsoberfläche sein.

Dies ist auch der Grund, weswegen Lichtleiter bei dentalen Lichthärtgeräten, die als Handgeräte ausgebildet sind, häufig abgekröpft sind, wobei es sich versteht, dass auch größere Abkröpfwinkel als 45 ° möglich sind.

Auch eine leichte Schrägstellung der Normalen der Lichtaustrittsfläche zur Normalen der Dentalrestauration ist jedoch unkritisch; bei einem Schrägstellungswinkel von beispielsweise 20 ° ändert sich der Anteil der totalreflektierten Strahlung zur gebrochenen und in die Dentalrestauration eintretenden Strahlung nur unwesentlich. Dies gilt selbstverständlich in gleicher Weise für die Höcker und Fossae auf der Okklusionsfläche der Dentalrestauration, die ebenfalls Schrägstellungen der Normalen zur Normalen der Lichaustrittsfläche aufweisen.

Während demnach der Schrägstellungswinkel für den Erfolg der Durchhärtung der Dentalrestauration relativ unkritisch ist, bestehen die größten Probleme, wenn der Zahnarzt oder Zahntechniker während des Polymerisationsvorgangs gleichsam abrutscht oder die Lichtaustrittsfläche mindestens teilweise seitlich verlagert, wobei sich seitlich auf eine Verlagerung sowohl in palatinal/lingualer, in vestibulärer als auch in mesialer oder distaler Richtung bezieht, bei einer Dentalrestauration, die sich mindestens teilweise okklusionsseitig erstreckt.

Erfindungsgemäß ist die Lichtaustrittsfläche zunächst vergrößert, so dass sichergestellt ist, dass sie auch bei leichter Fehlausrichtung stets die Lichtempfangsfläche der Dentalrestauration vollständig abdeckt. Bei dem in Fig. 2 dargestellten Ausgangssignal der Sensoren - entsprechend der gemessenen Reflexionsstrahlung - ist es zu einer Verlagerung beispielsweise in mesialer Richtung gekommen. Dort erfasst ein Sensor eine hochglänzende Oberfläche, beispielsweise einen natürlichen Zahn oder eine Porzellankrone. Dies führt dazu, dass zum Störzeitpunkt t_{S} das aufsummierte Ausgangssignal der Sensoren zunimmt, entsprechend dem dort dargestellten Höcker.

Nachdem die Verlagerung lediglich geringfügig ist, wird der Polymerisationszyklus beibehalten, aber dennoch ein Alarmsignal abgegeben, um den Behandler darauf hinzuweisen, dass möglicherweise eine Nachbesserung oder gegebenenfalls eine Korrektur sinnvoll ist.

Bei der Situation gemäß Fig. 3 ist demgegenüber zum Störzeitpunkt t_{S} die Verlagerung in Richtung Mundhöhle erfolgt. Mindestens einer der Sensoren erfasst daher kein Signal mehr, und dementsprechend sinkt sein Ausgangssignal, was zu der dargestellten Absenkung der Reflexionslichtleistung führt, zum Zeitpunkt t_{S}.

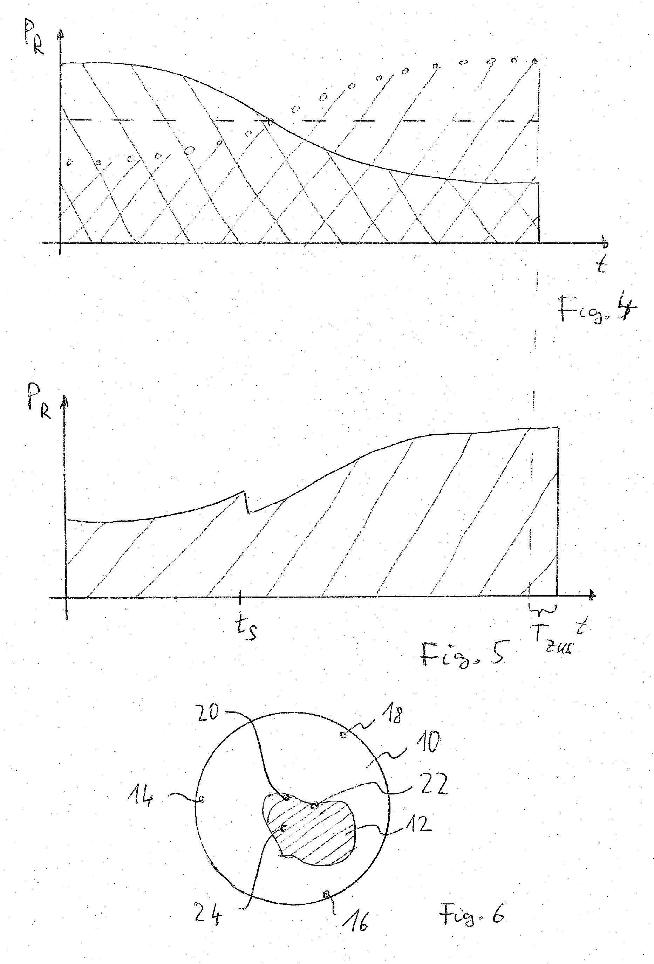

Aus Fig. 4 ist ersichtlich, in welcher Weise sich in vorteilhafter Ausgestaltung die Lichtleistung zur Kompensation der Oberflächenverfestigung erhöhen lässt. Mit durchgezogener Linie ist wiederum das Ausgangssignal des oder der Sensoren dargestellt, dass die den bereits erläuterten Verlauf hat. Um trotz der Beeinträchtigung der Durchdringung durch die Reduktion der Durchlässigkeit des Polymers aufgrund seiner Polymerisation die Abnahme der Wirksamkeit der Strahlung zu kompensieren, wird die Lichtleistung entsprechend der gepunkteten Linie symmetrisch erhöht, so dass die gemessene Reflexionsleistung insgesamt den schematisch dargestellten gestrichelten Verlauf hat.

Gemäß Fig. 5 sei nun zum Störzeitpunkt t_{S} ein störender Versatz der Lichtaustrittsfläche über der Dentalrestauration angenommen. Wie sich aus dem Vergleich von Fig. 4 und Fig. 5 ergibt, wird der Polymerisationszyklus um einen Zeitraum T_{ZUS} verlängert. Dessen Länge hängt von der Verminderung der Reflexionsleistung ab.

Es versteht sich, dass anstelle dessen auch eine Erhöhung der Lichtleistung über die Regelreserve möglich ist, wenn diese nicht durch die Maßnahme gemäß Fig. 4 bereits ausgeschöpft ist.

Aus Fig. 6 ist die erfindungsgemäße Anordnung der Empfindlichkeitsfelder der Sensoren an der Lichtaustrittsfläche 10 ersichtlich. Zusätzlich ist die Dentalrestauration 12 in Fig. 6 eingeblendet dargestellt, woraus sich ergibt, dass die Lichtaustrittsfläche deutlich größer, beispielsweise doppelt so groß ist wie die Fläche der Dentalrestaurationen 12 in der Vertikalprojektion.

In der erfindungsgemäßen Ausführung sind drei Sensoren 14, 16 und 18 am Außenumfang der Lichtaustrittsfläche 10 angeordnet, und zusätzlich drei mittennahe Sensoren 20, 22 und 24. Wie in dem dargestellten Ausführungsbeispiel ersichtlich ist, erfassen die Sensorfelder 20 bis 24 unmittelbar den Bereich der Dentalrestauration 12, während die Sensorfelder 14 bis 18 außerhalb dieser wirken. Durch die Aufsummation ist sichergestellt, dass stets mindestens teilweise auch die Dentalrestauration von einem der Sensorfelder erfasst wird.

Es versteht sich, dass auch zusätzlich eine Differenzierung zwischen verschiedenen Sensorfeldern und entsprechenden Sensoren ausgewertet werden kann, so dass die exakte Position der Dentalrestauration 12 unter der Lichtaustrittsfläche 10 im Grunde bestimmbar ist und auch Verlagerungshinweise an den Behandelnden abgegeben werden können.

Es versteht sich auch, dass die Anzahl der Sensorfelder und deren Anordnung nicht auf das hier dargestellte Beispiel beschränkt ist; viel mehr kann eine beliebige Mehrzahl von Sensoren in beliebiger Anordnung eingesetzt werden, ohne den Bereich der Erfindung zu verlassen.

## Patentansprüche

1. Lichthärtgerät für die Polymerisation von Dentalmaterial, mit einer Lichtquelle, die in einem handgeführten Lichthärtgerät angeordnet ist und insbesondere eine Mehrzahl von einander benachbarten und nebeneinander angeordneten Chips, die eine Lichtquelle bilden aufweist, vor welchen sich ein Lichtleitkörper zu einer Lichtaustrittsfläche (10) erstreckt, mit mindestens einem Sensor, der für Licht im Emissionswellenlängenbereich der Lichtquelle empfindlich ist, und mit einer Steuervorrichtung für die Steuerung der Lichtquelle während der Polymerisation des Dentalmaterials, an welche Steuervorrichtung der Sensor angeschlossen ist, **dadurch gekennzeichnet, dass** die Steuervorrichtung während der Polymerisation das Ausgangssignal des Sensors laufend oder mindestens wiederkehrend überwacht und bei Veränderung, insbesondere Reduktion des Ausgangssignals die Lichtleistung anpasst und/oder die Polymerisationszeit anpasst, und dass die Steuervorrichtung die über die Lichtaustrittsfläche (10) erfasste Reflexionsstrahlung und/oder deren Veränderung zur Berechnung einer etwaigen Ortsabweichung aufsummiert, und dass die Lichtaustrittsfläche (10) des Lichtleiters insbesondere größer als oder gleich wie die größte zu härtende Dentalrestauration (12) ist, insbesondere eine Querschnittsfläche von mehr als 1 cm² aufweist, wobei mehrere Sensoren an dem Lichthärtgerät vorgesehen sind und wobei in einem ersten Empfindlichkeitsfeld mindestens drei, unmittelbar den Bereich der Dentalrestauration (12) erfassende, Sensoren (20, 22, 24) mittennahe in der Lichtaustrittsfläche (10) und in einem zweiten Empfindlichkeitsfeld mindestens drei Sensoren (14, 16, 18) am Außenumfang der Lichtaustrittsfläche (10) angeordnet sind.

2. Lichthärtgerät nach Anspruch 1, **dadurch gekennzeichnet, dass** die Steuervorrichtung über die reflektierte und von den Sensoren erfasste Strahlung Bewegungen des Lichthärtgeräts gegenüber einer inhomogenen Oberfläche erfasst und die Lichtleistung und/oder die Polymerisationszeit vergrößert, wenn die reflektierte Strahlung gegenüber einem Ausgangswert verändert ist.

3. Lichthärtgerät nach einem der vorhergehenden Ansprüche, **dadurch gekennzeichnet, dass** die gesamte, insbesondere kreisförmige, Lichtaustrittsfläche (10) des Lichtleiters als Empfangsfläche für die reflektierte Strahlung zur Verfügung steht und die reflektierte Strahlung den Sensoren am anderen Ende des Lichtleiters zugeleitet ist.

4. Lichthärtgerät nach einem der vorhergehenden Ansprüche, **dadurch gekennzeichnet, dass** die Ortsabweichung eine Abweichung des Orts quer zu einer Achse eines Lichtleiters des Lichthärtgeräts, oder quer zu einer Normalen der Lichtaustrittsfläche (10) betrifft.

5. Lichthärtgerät nach einem der vorhergehenden Ansprüche, **dadurch gekennzeichnet, dass** die Ortsabweichung eine Abweichung des Orts in Richtung der normalen Lichtaustrittsfläche betrifft.

6. Lichthärtgerät nach einem der vorhergehenden Ansprüche, **dadurch gekennzeichnet, dass** die Ortsabweichung eine Abweichung des Winkels der normalen Lichtaustrittsfläche zu der zu bestrahlenden Fläche ist.

7. Lichthärtgerät nach einem der vorhergehenden Ansprüche, **dadurch gekennzeichnet, dass** die Steuervorrichtung einen Schwellwertmodus aufweist, in welchem das Ausgangssignal der Sensoren bei eingeschalteter Lichtquelle ohne Reflexion, also beispielsweise in einem schwarzen Raum, erfasst und als Nullsignal definiert ist.

8. Lichthärtgerät nach einem der vorhergehenden Ansprüche, **dadurch gekennzeichnet, dass** die Steuervorrichtung mit einer Nennleistung eingeschalteten Lichtquelle und bei auf einer Dentalrestauration (12) oder eine entsprechende Oberfläche gerichteter Lichtaustrittsfläche (10) des Lichtleiters die von den Sensoren erfasste reflektierte Strahlung als Sollwert verarbeitet und die Lichtleistung und/oder die Polymeriationszeit entsprechend auf diesen Sollwert regelt.

9. Lichthärtgerät nach einem der vorgehenden Ansprüche, **dadurch gekennzeichnet, dass** die Sensoren neben den Chips angeordnet sind und insbesondere jeder Sensor von zwei Chips gleich beabstandet ist.

10. Lichthärtgerät nach einem der vorhergehenden Ansprüche, **dadurch gekennzeichnet, dass** jeder Chip mindestens einen Reflektor aufweist und dass der oder die Sensoren außerhalb des Reflektors neben diesem angeordnet ist oder sind, insbesondere so nahe wie möglich an diesen gerückt.

11. Lichthärtgerät nach einem der vorhergehenden Ansprüche, **dadurch gekennzeichnet, dass** die aus der Lichtaustrittsfläche (10) des Lichtleiters austretende Strahlung im wesentlichen homogen ist und dass wenn bei Schrägstellung der Lichtaustrittsfläche (10) zu der Reflektionsfläche des zu polymerisiserenden Objekts mindestens ein Teil der reflektierten Strahlung außerhalb der Lichtaustrittsfläche (10) an dieser vorbeigeleitet ist und von den Sensoren nicht erfasst ist, die Leistung des Lichthärtgeräts erhöht und/oder der Polymerisationszyklus verlängert wird, oder gegebenenfalls das Lichthärtgerät abschaltet.

12. Lichthärtgerät nach einem der vorhergehenden Ansprüche, **dadurch gekennzeichnet, dass** die Steuervorrichtung zu einem vorgegebenen Zeitpunkt nach Beginn des Polymerisationszyklus, insbesondere 50 Millisekunden nach dessen Beginn, den Wert des Ausgangssignals des Sensors erfasst und mit dem Sollwert vergleicht und das Lichthärtgerät abschaltet, wenn der Sollwert um ein vorgegebenes Maß über- oder unterschritten ist.

13. Lichthärtgerät nach einem der vorhergehenden Ansprüche, **dadurch gekennzeichnet, dass** die Steuervorrichtung bei Erhöhung des Ausgangssignals die Lichtleistung verändert und/oder die Polymerisationszeit verkürzt.

14. Lichthärtgerät nach einem der vorhergehenden Ansprüche, **dadurch gekennzeichnet, dass** das Ausgangssignal des Sensors ausschließlich während des Polymerisationszyklus von der Steuervorrichtung erfasst wird und der Sensor derart gewählt wird, dass ein einer Gaußkurve entsprechendes Empfindlichkeitsspektrums des Sensors das Emissionsmaximum der Lichtquelle abdeckt, auch wenn Chips mit unterschiedlichen Emissionsmaxima eingesetzt sind.

15. Lichthärtgerät nach einem der vorhergehenden Ansprüche, **dadurch gekennzeichnet, dass** die Steuervorrichtung bei Abweichung der durch den Sensor erfassten wirksamen Lichtleistung um weniger als ein vorgegebenes Maß den Polymerisationszyklus, gegebenenfalls nach Anpassung der Lichtleistung und/oder der Polymerisationszeit, fortsetzt.

16. Lichthärtgerät nach einem der vorhergehenden Ansprüche, **dadurch gekennzeichnet, dass** beim Start des Polymerisationszykluses und/oder in einem Kalibrierzyklus vor dem Start des Polymerisationszyklus das Ausgangssignal des mindestens einen Sensors erfasst und als Referenzwert gespeichert ist und dass die Lichtleistung und/oder die Polymerisationszeit angepasst wird, wenn sich das Ausgangssignal gegenüber dem Referenzwert ändert, insbesondere basierend auf einer Hysterese oder einem Schwellwert der Änderung.

17. Lichthärtgerät nach einem der vorhergehenden Ansprüche, **dadurch gekennzeichnet, dass** mindestens ein Sensor ein spektrales Empfindlichkeitsmaximum bei einer Lichtwellenlänge und mindestens ein weiterer Sensor ein spektrales Empfindlichkeitsmaximum bei einer weiteren Lichtwellenlänge aufweist und dass aus der Änderung der Ausgangssignale dieser beiden Sensoren ein von der Steuervorrichtung ein Farbumschlag des zu beaufschlagenden Dentalmaterials erfasst wird.

## Claims

1. A light curing apparatus for the polymerization of dental material having a light source, which is arranged In a hand held light curing apparatus and especially comprising a plurality of chips adjacent to each other and facing each other, forming a light source, from which a light conducting body extends to a light-emitting surface (10), having at least one sensor, which is sensitive to light in the emission wavelength range of the light source, and having a control device for controlling the light source during polymerization of the dental material, to which control device the sensor Is connected, **characterized in that** the control device, during polymerization, monitors the initial signal of the sensor continuously or at least periodically, and upon a change, especially reduction of the initial signal, adapts the light output and/or adapts the polymerization time, and **in that** the control device sums up the reflected radiation acquired through the light-emitting surface (10) and/or change thereof for calculating any positional deviation, and **in that** the light-emitting surface (10) of the light conductor especially Is larger than or equal to the largest dental restoration (12) to be cured, especially having a cross sectional area of more than 1 cm², wherein multiple sensors are provided on the light curing apparatus and wherein, in a first sensitivity field, at least three sensors (20, 22, 24) directly acquiring the area of the dental restoration (12) are arranged centrally-close in the light-emitting surface (10), and In a second sensitivity field at least three sensors (14, 16, 18) are arranged at the outer circumference of the light-emitting surface (10).

2. The light curing apparatus according to Claim 1, **characterized In that** the control device acquires movements of the light curing apparatus in relation to an inhomogeneous surface through the radiation reflected, and acquired by the sensors and increases the light output and/or the polymerization time if the reflected radiation differs from an initial value.

3. The light curing apparatus according to one of the preceding Claims, **characterized in that** the total, especially circular, light-emitting surface (10) of the light conductor is available as a receiving surface for the reflected radiation and the reflected radiation is fed to the sensors at the other end of the light conductor.

4. The light curing apparatus according to one of the preceding Claims, **characterized in that** the positional deviation relates to a deviation of the position transversally to an axis of a light conductor of the light curing apparatus, or transversally to a normal of the light-emitting surface (10).

5. The light curing apparatus according to one of the preceding Claims, **characterized in that** the positional deviation relates to a deviation of the position towards the regular light-emitting surface.

6. The light curing apparatus according to one of the preceding Claims, **characterized in that** the positional deviation is a deviation of the angle of the regular light-emitting surface with the surface to be irradiated.

7. The light curing apparatus according to one of the preceding Claims, **characterized in that** the control device has a threshold value mode, where the initial signal of the sensor, upon the light source being turned on, is acquired without any reflexion, i.e. for example in a black box space, and is defined as a zero signal.

8. The light curing apparatus according to one of the preceding Claims, **characterized in that** the control device, with a rated output-operating light source and with a light-emitting surface (10) of the light conductor directed to a dental restoration (12), or with an appropriate surface of the sensor, processes reflected radiation acquired by the sensors as a set value, and accordingly regulating the light output and/or the polymerization time to said set value.

9. The light curing apparatus according to one of the preceding Claims, **characterized in that** the sensors are arranged adjacent to the chips and especially each sensor is equally spaced apart from two chips.

10. The light curing apparatus according to one of the preceding Claims, **characterized in that** each chip comprises at least one reflector and **in that** said sensor or sensors is or are arranged exterior of the reflector adjacent to it, and especially are approached to it as close as possible.

11. The light curing apparatus according to one of the preceding Claims, **characterized in that** radiation leaving the light-emitting surface (10) of the light conductor essentially is homogenous and that upon inclining the light-emitting surface (10) in relation to the reflecting surface of the object to be polymerized, at least part of the reflecting radiation is passed exterior of the light-emitting surface (10) and is not acquired by the sensors, the output of the light curing apparatus is increased and/or the polymerization cycle is extended, or eventually turns off the light curing apparatus.

12. The light curing apparatus according to one of the preceding Claims, **characterized in that** the control device acquires the value of the initial signal of the sensor at a predetermined point of time after the start of the polymerization cycle, especially 50 milliseconds after the start thereof, and comparing it to the set value, and turning off the light curing apparatus if the set value is exceed or is undercut by a preset level.

13. The light curing apparatus according to one of the preceding Claims, **characterized in that** the control device, upon increasing the initial signal, changes the light output and/or reduces the polymerization time.

14. The light curing apparatus according to one of the preceding Claims, **characterized in that** das initial signal of the sensor is exclusively acquired by the control device during the polymerization cycle and the sensor is selected such that a sensitivity spectrum of the sensor corresponding to a Gaussian curve covers the emission maximum of the light source, even if chips having different emission maxima will be employed.

15. The light curing apparatus according to one of the preceding Claims, **characterized in that** the control device, upon deviation of the effective light output acquired by the sensor, continues the polymerization cycle by less than a predetermined degree, eventually following adaption of the light output and/or the polymerization time.

16. The light curing apparatus according to one of the preceding Claims, **characterized in that**, upon starting the polymerization cycle, and/or in a calibration cycle prior to starting the polymerization cycle, the initial signal of the at least one sensor will be acquired and saved as a reference value and that the light output and/or the polymerization time will be adapted, if the initial signal changes in comparison to the reference value, especially changes based on a hysteresis or on a threshold value of the change.

17. The light curing apparatus according to one of the preceding Claims, **characterized in that** at least one sensor comprises a spectral sensitivity maximum at a wavelength and at least another sensor comprises a spectral sensitivity maximum at another wavelength of light and that from the change of the initial signal of said two sensor a color change of the dental material to be treated is acquired by the control device.

## Revendications

1. Dispositif de photopolymérisation pour la polymérisation de matériau dentaire, avec une source lumineuse qui est disposée dans un dispositif de photopolymérisation à guidage manuel et en particulier présente une pluralité de puces disposées contiguës les unes aux autres et les unes à côté des autres, qui forment une source de lumière, devant laquelle un corps conducteur de lumière s'étend à une surface de sortie de lumière (10), avec au moins un capteur qui est sensible à la lumière dans la zone de longueur d'onde d'émission de la source de lumière et avec un dispositif de commande pour commander la source de lumière au cours de la polymérisation du matériel dentaire, le capteur étant relié audit dispositif de commande, **caractérisé en ce que**, pendant la polymérisation, le dispositif de commande surveille le signal de sortie du capteur en continu ou au moins périodiquement, et en cas de modification, en particulier d'une réduction du signal de sortie, ajuste l'intensité lumineuse et/ou la durée de la polymérisation, et que le dispositif de commande additionne le rayonnement réfléchi détecté par le biais de la surface de sortie de lumière (10) et/ou les changements dans celui-ci pour calculer un écart positionnel éventuel, et que la surface de sortie de lumière (10) du conducteur optique est en particulier supérieure ou égal à la restauration dentaire plus grande (12) à polymériser, en particulier présente une section transversale de 1 cm2, où plusieurs capteurs sont fournis sur le dispositif de photopolymérisation et où, dans un premier champ de sensibilité, au moins trois capteurs (20, 22, 24) couvrant directement la zone de la restauration dentaire (12) sont disposés près du centre de la surface de sortie de lumière (10), ainsi qu'au moins trois capteurs (14, 16, 18) dans un deuxième champ de sensibilité à la périphérie externe de la surface de sortie de lumière (10).

2. Dispositif de photopolymérisation selon la revendication 1, **caractérisé en ce qu'**à travers le rayonnement réfléchi et détecté par les capteurs, le dispositif de commande détecte des mouvements du dispositif de photopolymérisation par rapport à une surface non homogène et augmente la puissance lumineuse et/ou le temps de photopolymérisation, quand le rayonnement réfléchi est modifié par rapport à une valeur initiale.

3. Dispositif de photopolymérisation selon l'une des revendications précédentes, **caractérisé en ce que** la surface complète, en particulier circulaire, de sortie de lumière (10) du conducteur optique est disponible comme surface d'accueil pour le rayonnement réfléchi et le rayonnement réfléchi est dirigé aux capteurs à l'autre extrémité du conducteur optique.

4. Dispositif de photopolymérisation selon l'une des revendications précédentes, **caractérisé en ce que** l'écart positionnel concerne un écart de position perpendiculaire à un axe d'un conducteur optique du dispositif de photopolymérisation, ou perpendiculaire à une normale de la surface de sortie de la lumière (10).

5. Dispositif de photopolymérisation selon l'une des revendications précédentes, **caractérisé en ce que** l'écart positionnel est un écart de position en direction de la surface de sortie normale de la lumière.

6. Dispositif de photopolymérisation selon l'une des revendications précédentes, **caractérisé en ce que** l'écart positionnel est un écart de l'angle de la surface de sortie normale de la lumière de la surface à être irradiée.

7. Dispositif de photopolymérisation selon l'une des revendications précédentes, **caractérisé en ce que** le dispositif de commande présente un mode de valeur seuil, dans lequel le signal de sortie des capteurs lorsque la source lumineuse est allumée sans réflexion, par exemple dans un espace non éclairé, est détecté et est défini comme le signal zéro.

8. Dispositif de photopolymérisation selon l'une des revendications précédentes, **caractérisé en ce que** le dispositif de commande avec une source lumineuse en état de marche à une puissance nominale ou une surface de sortie de lumière (10) du conducteur optique dirigée vers une restauration dentaire (12) ou une surface correspondante traitée recueillie reflète le développement du faisceau des capteurs et ajuste la luminosité et/ou la le temps de polymérisation selon l'attribution de cette valeur.

9. Dispositif de photopolymérisation selon l'une des revendications précédentes, **caractérisé en ce que** les capteurs sont disposés à côté des puces et en particulier que chaque capteur est équidistant de deux puces.

10. Dispositif de photopolymérisation selon l'une des revendications précédentes, **caractérisé en ce que** chaque puce présente au moins un réflecteur et le ou les capteurs est ou sont disposés en dehors du réflecteur a côté de celui-ci, ou, en particulier aussi proche que possible à celui-ci.

11. Dispositif de photopolymérisation selon l'une des revendications précédentes, **caractérisé en ce que** le rayonnement qui sort de la surface de sortie de lumière (10) du conducteur optique est essentiellement homogène et que si, lors de l'inclinaison de la surface de sortie de lumière (10) par rapport à la surface de réflexion de l'objet à polymériser, au moins une partie du rayonnement réfléchi à l'extérieur de la surface de sortie de lumière (10) est éloigné de celle-ci et n'est pas détecté par les capteurs, la puissance de l'appareil de polymérisation est augmenté et/ou le cycle de polymérisation est prolongé, ou éventuellement le dispositif de polymérisation s'éteint.

12. Dispositif de photopolymérisation selon l'une des revendications précédentes, **caractérisé en ce que** le dispositif de commande, à un moment prédéterminé après le début du cycle de polymérisation, en particulier 50 millisecondes après son début, détecte la valeur du signal de sortie du capteur et la compare avec la valeur prédéterminée et éteint le dispositif de polymérisation, si la valeur prédéterminée est dépassée ou n'est pas atteinte au-delà d'un niveau prédéterminé.

13. Dispositif de photopolymérisation selon l'une des revendications précédentes, **caractérisé en ce que** lors d'une augmentation du signal de sortie le dispositif de commande modifie la puissance lumineuse et/ou raccourcit le temps de polymérisation.

14. Dispositif de photopolymérisation selon l'une des revendications précédentes, **caractérisé en ce que** le signal de sortie du capteur est capturé par le dispositif de commande uniquement au cours du cycle de polymérisation et que le capteur est sélectionné de telle manière qu'un spectre de sensibilité du capteur correspondant à une courbe de Gauss couvre l'émission maximale de la source lumineuse, même si des puces ayant différents maxima d'émissions sont employées.

15. Dispositif de photopolymérisation selon l'une des revendications précédentes, **caractérisé en ce que** lors d'une déviation de la puissance lumineuse efficace détectée par le capteur inférieurs à un niveau prédéterminé, le dispositif de commande poursuit le cycle de polymérisation, éventuellement après avoir adaptée la puissance lumineuse et/ou le temps de polymérisation.

16. Dispositif de photopolymérisation selon l'une des revendications précédentes, **caractérisé en ce que** lors du lancement du cycle de polymérisation et/ou pendant un cycle d'étalonnage avant le lancement du cycle de polymérisation le signal de sortie dudit au moins un capteur est détecté est stocké comme valeur de référence, et que la puissance lumineuse est ajustée et/ou le temps de polymérisation est ajustée si le signal de sortie change par rapport à la valeur de référence, en particulier basé sur une hystérésis ou une valeur seuil de changement.

17. Dispositif de photopolymérisatian selon l'une des revendications précédentes, **caractérisé en ce qu'**au moins un capteur présente une sensibilité spectrale maximale à une longueur d'onde de la lumière et au moins un autre capteur présente au moins une sensibilité spectrale maximale à une autre longueur d'onde de la lumière, et qu'à partir de la variation des signaux de sortie de ces deux capteurs une variation de la couleur du matériau dentaire à exposer est détecté par le dispositif de commande.
